# EUROPEAN PATENT SPECIFICATION

(11) **EP 1 981 618 B1**
(45) Date of publication and mention of the grant of the patent: **02.05.2012**
(21) Application number: 07700419.0
(22) Date of filing: 12.01.2007
(51) Int. Cl.: B01D 53/68, B01D 53/30, B01D 53/75

(54) **METHOD OF TREATING A GAS STREAM**
VERFAHREN ZUM BEHANDELN EINES GASSTROMS
PROCEDE DE TRAITEMENT D'UN FLUX DE GAZ

(30) Priority: 08.02.2006 GB 0602506
(43) Date of publication of application: 22.10.2008
(73) Proprietor: Edwards Limited, Manor Royal Crawley West Sussex RH10 9LW (GB)
(72) Inventor: SEELEY, Andrew James, Clevedon Somerset BS21 6TH (GB); SMITH, James Robert, Clevedon Somerset BS21 6TH (GB)
(74) Representative: Clark, Charles Robert
(86) International application number: PCT/GB2007/050012
(87) International publication number: WO 2007/091100

(56) References cited:
- EP-A- 1 048 337
- EP-A1- 1 297 891
- JP-A- 10 252 651
- US-A- 5 213 767
- US-A1- 2002 111 045

## Description

The present invention relates to a method of, and apparatus for, treating a gas stream exhaust from a chamber.

Various different gases may be supplied to a process chamber during the formation of a semiconductor or flat panel display device within the chamber. Chemical vapour deposition (CVD) is used to deposit thin films or layers on the surface of a substrate or wafer located in a deposition chamber. This process operates by supplying one or more reactive gases to the chamber, often using a carrier gas, to the substrate's surface under conditions that encourage chemical reactions to take place at the surface. For example, TEOS and one of oxygen and ozone may be supplied to the deposition chamber for the formation of a silicon oxide layer on the substrate, and silane and ammonia may be supplied for the formation of a silicon nitride layer. Polycrystalline silicon, or polysilicon, is deposited on the substrate by the decomposition of silane or a chlorosilane by heat.

Gases are also supplied to an etch chamber to perform selective etching of areas of the deposited layers, for example during the formation of electrodes and the source and drain regions of a semiconductor device. Etching gases can include the perfluorinated (PFC) gases such as CF₄, C₂F₆, C₃F₈, and C₄F₈, although other etchants including hydrofluorocarbon gases, such as CHF₃, C₂HF₅ and CH₂F₂, fluorine, NF₃ and SF₆. Such gases are commonly used to form an opening in a region of a nitride or oxide layer formed over a polysilicon layer and which is exposed by a photoresist layer. Argon is generally also conveyed to the chamber with the etching gas to provide a facilitating gas for the process being conducted in the etch chamber.

During such an etch process, there is typically a residual amount of the gas supplied to the etch chamber contained in the exhaust gas drawn from the etch chamber by a vacuum pump, together with by-products from the etching process, such as SiF₄ and COF₂, and inert gases such as Ar. Additional nitrogen is often added to the exhaust gas at a flow rate of around 40 to 50 slm as a purge gas for the vacuum pump.

The perfluorinated gases mentioned above are greenhouse gases, and so in view of this, before the exhaust gas is vented to the atmosphere, an abatement device is typically provided to treat the exhaust gas to convert the PFC gases into species that can be readily removed from the exhaust gas, for example by conventional scrubbing, and/or can be safely exhausted to the atmosphere. However, in view of the relatively high flow rate of purge gas added to the exhaust gas in comparison to the flow rate of the exhaust gas from the process chamber (typically around 0.5 to 5 slm), the addition of purge gas can significantly decrease the destruction efficiency of the abatement device or increase the energy requirement of the abatement device.

An Example of a PFC recycling device is described in JP 10 252651, and an example of a PFC abatement device is described in EP 1 297 891.

In a first aspect, the present invention provides a method of treating a gas stream exhaust from a chamber, the method comprising the steps of adding to the gas stream a purge gas for a vacuum pump for pumping the gas stream from the chamber; and characterised in that the method further comprises the steps of : removing a first species from the gas stream using a first abatement device; splitting the gas stream into first and second portions; removing a second species from the first portion of the gas stream using a second, plasma abatement device, and returning the second portion of the gas stream to the pump.

By diverting a portion of the gas stream away from the plasma abatement device, the flow rate of the gas stream entering the plasma abatement device can be significantly reduced, thereby enhancing the destruction efficiency of the device. The concentration of perfluorinated species within the non-diverted portion of the gas stream will gradually increase with time, which can improve the destruction efficiency of the plasma abatement device. Furthermore, by returning the diverted portion to the gas stream as a purge gas for the vacuum pump, the flow rate of fresh purge gas to the vacuum pump can be significantly reduced. As this is a closed loop system, in that the diverted portion of the gas stream is retained within the abatement system, all of the perfluorinated species in the gas stream will eventually be treated by the plasma abatement device.

The diverted portion of the gas stream is preferably passed through at least one of a heat exchanger and a compressor prior to its return to the pump.

The diverted portion of the gas stream is preferably added to a stream of inert gas being supplied to the pump. Alternatively, this portion of the gas stream may be added to the gas stream separately from the inert gas, either upstream, downstream or between stages of the vacuum pump.

At least one species is preferably removed from the gas stream before said portion of the gas stream is diverted therefrom. This species is preferably a chemically reactive or corrosive species contained by the gas stream, and may be removed by any suitable means. In the preferred embodiment, the gas stream is passed through a heated bed of one or more materials for reacting with said species. This species may be a by-product from a process occurring in a chamber from which the gas stream is drawn by the vacuum pump. For example, where the process is an etch process performed on a silicon or dielectric layer, the species may comprise one of SiF₄ and COF₂.

The plasma abatement device may be a microwave plasma abatement device or a dc torch. By reducing the flow rate of the gas stream through the device, the power requirement of the abatement device for maintaining an acceptable destruction efficiency for the perfluorinated gas can be significantly reduced. The perfluorinated species may be any of the gases having the general formula Cₓ F_{y} H_{z}, where x ≥ 1, y ≥ 1 and z ≥ 0, such as CF₄, C₂F₆, C₃F₈, C₄F₈, CHF₃, C₂HF₅ and CH₂F₂, NF₃ or SF₆.

The gas stream exhaust from the plasma abatement device may be conveyed to a third abatement device for removing a third species from the gas stream. This third species may be a by-product from the removal of the second species from the gas stream. The third abatement device preferably comprises a wet scrubber.

In a third aspect, the present invention provides an apparatus for treating a gas stream, the apparatus comprising a vacuum pump and a plasma abatement device located downstream from the vacuum pump for removing a perfluorinated species from the gas stream characterised in that the apparatus further comprises a first abatement device for removing a first species from the gas stream upstream of the plasma abatement device, means for diverting a portion of the gas stream away from the plasma abatement device, and means for returning the diverted portion to the gas stream as a purge gas for the vacuum pump.

In a fourth aspect, the present invention provides apparatus for treating a gas stream, the apparatus comprising a vacuum pump, a first abatement device for removing a first species from the gas stream, a second, plasma abatement device located downstream from the first abatement device for removing a second, perfluorinated species from the gas stream, means for diverting a portion of the gas stream away from the plasma abatement device, and means for returning the diverted portion to the gas stream as a purge gas for the vacuum pump.

Features described above in relation to the first aspect of the invention are equally applicable to the second to fourth aspects, and vice versa.

Preferred features of the present invention will now be described, by way of example only, with reference to the accompanying drawings, in which:
Figure 1 illustrates a first embodiment of an apparatus for treating a gas stream exhaust from a chamber of a plasma etch reactor;
Figure 2 illustrates a second embodiment of an apparatus for treating a gas stream exhaust from a plurality of chambers; and
Figure 3 illustrates a third embodiment of an apparatus for treating a gas stream exhaust from a plurality of chambers.

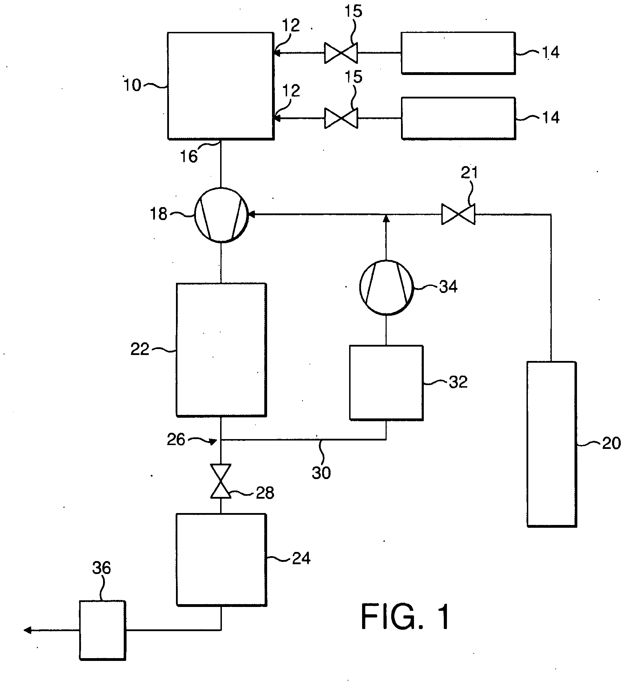

With reference first to Figure 1, the chamber 10 of the plasma etch reactor is provided with at least one inlet 12 for receiving process gases from gas sources indicated generally at 14 in the drawing. A control valve or mass flow controller 15 may be provided for each respective gas, the mass flow controllers 15 being controlled by a system controller to ensure that the required amount of gas is supplied to the chamber 10. In this example, the process gases comprise an etchant and oxygen as reactants for the process being conducted in the chamber 10, together with argon. Examples of suitable etchant include the perfluorinated compounds having the general formula CₓF_{y}H_{z} where x ≥ 1, y ≥ 1 and z ≥ 0, such as CF₄, C₂F₆, C₃F₈, C₄F₈, CHF₃, C₂HF₅ and CH₂F₂, NF₃, and SF₆. Argon provides a facilitating gas for the process being conducted in the chamber 10. Helium may also be supplied to the chamber 10 in relatively small amounts to cool the back surface of a substrate located within the process chamber.

The plasma etch reactor may be any suitable reactor for generating a plasma for etching the surface of a substrate located therein to a desired geometry. Examples include an inductively coupled plasma etch reactor, an electron cyclotron resonance (ECR) plasma etch reactor, or other high-density plasma reactor. In this example, the plasma etch reactor is a reactor in which a semiconductor manufacturing process takes place, and so the surface of the substrate may comprise a polysilicon or a dielectric film. Alternatively, the manufacture of flat panel displays may take place within the plasma etch reactor.

A gas stream is drawn from the outlet 16 of the chamber 10 by a vacuum pumping arrangement comprising one or more vacuum pumps, indicated generally at 18. The vacuum pumping arrangement may be in the form of a turbomolecular pump and/or a dry pump having intermeshing rotors. A turbomolecular pump can generate a vacuum of at least 10⁻³ mbar in the chamber 10. The flow rate of the gas stream from the chamber 10 is generally around 0.5 to 5 slm.

During the etching process, only a portion of the reactants will be consumed, and so the gas stream exhaust from the outlet 16 of the chamber 10 will contain a mixture of the reactants, any unreactive noble gases supplied to the chamber, and by-products from the etch process. For example, the gas stream may contain a mixture of CₓF_{y}H_{z}, O₂, Ar, He, SiF₄, and COF₂. The etching process may include a number of different process steps, and so the composition of the gas stream exhaust from the chamber 10, and/or the relative proportions of the components of the gas stream, may vary with time.

As illustrated in the drawing, a stream of inert purge gas, such as helium or, as in this example, nitrogen, is supplied from a source 20 thereof to the vacuum pumping arrangement, for example for increasing the longevity and effectiveness of dynamic shaft seals of the pump(s) 18, and/or for diluting the gas stream to reduce corrosion and degradation resulting from the pumping of aggressive, unconsumed gas molecules. Purge gas is generally added to the gas stream at a relatively high flow rate, for example around 40 to 50 slm, in comparison to the flow rate of gas from the chamber 10. The flow rate of purge gas to the vacuum pumping arrangement may be controlled using a control valve 21 located between the pump(s) 18 and the purge gas source 20.

The gas stream exhaust from the vacuum pumping arrangement thus now contains nitrogen, in addition to gas exhaust from the chamber 10. In order to remove some of the components from the gas stream, the gas stream is subsequently conveyed through a first abatement device 22. The first abatement device 22 may take any desired form, such as an incineration or thermal decomposition unit, for removing desired components from the gas stream. However, due to the requirement to provide a fuel gas for burning the gas stream within a thermal decomposition unit, the further dilution of the gas stream and the addition of moisture to the gas stream (which, without removal, would increase the corrosive nature of the gas stream), in the illustrated example the first abatement device 22 is provided in the form of a gas reactor column or other dry abatement device for removing SiF₄, COF₂ and the more reactive CₓF_{y}H_{z} components from the gas stream. An example of a suitable gas reactor column is described in US patent no. 5,213,767, the contents of which are incorporated herein by reference. In overview, a gas reactor column contains a number of heated beds of material selected for the removal of particular components from the gas stream. In this example, the gas reactor column contains at least two heated stages, which may be conveniently provided within removable cartridges surrounded by an electrically heated furnace. A first stage contains heated granules of silicon for preheating the gas stream and converting the more reactive CₓF_{y}H_{z} components into F₂ and C, which either falls from the column in the form of soot or is converted into CO and CO₂ by the O₂ present within the gas stream. A second stage contains heated calcium oxide, preferably in the form of lime, for converting SiF₄ into CaF₂ and SiO₂, and F₂ into CaF₂. The relatively unreactive gases in the gas stream, namely, in this example, the noble gases He, and Ar, N₂ purge gas, the more stable CₓF₂ₓ₊₂ components, such as CF₄ and C₂H₆, CO and/or CO₂ pass through the gas reactor column unchanged.

Whilst a single gas reactor column may be provided, two or more similar gas reactor columns may be provided in parallel. For example, where two gas reactor columns are provided, one or more valves may be disposed between the vacuum pump 18 and the gas reactor columns to enable the gas stream to be directed to one gas reactor column while the other gas reactor column is off-line, for example for replacement of one or more of the cartridges, or being subject to a purge using, for example, nitrogen gas. This enables the gas stream to be continuously treated. In this case, an arrangement of one or more valves is also provided downstream from the gas reactor columns to connect the outputs from the gas reactor columns to a common gas conduit.

As discussed above, the gas stream exhaust from the first abatement device 22 typically contains, in this example, He, Ar, N₂, one or more perfluorinated species, such as CF₄ and C₂F₆, and one or both of CO₂ and CO. In order to remove the remaining perfluorinated species from the gas stream, a second abatement device in the form of a plasma abatement device 24 is provided downstream from the first abatement device 22. The plasma abatement device 24 is preferably a microwave plasma abatement device, although other forms of plasma abatement device, such as a dc torch, may be used.

Due to the presence of a relatively large proportion of purge gas within the gas stream exhaust from the first abatement device 22 in comparison to the perfluorinated species, to reduce the energy requirement of the plasma abatement device 24 the rate at which gas flows through the plasma abatement device 24 is reduced in comparison the rate at which the gas stream is exhaust from the first abatement device 22. In the illustrated example, a branch 26 is located between the first abatement device 22 and the plasma abatement device 24 for receiving the gas stream from the first abatement device 22 and splitting the gas stream into first and second portions. The first portion of the gas stream is conveyed to the plasma abatement device 24 through a variable control valve 28 or other device for controlling the flow rate of gas into the plasma abatement device 24. The second portion of the gas stream is diverted away from the plasma abatement device 24, and is conducted by gas conduit 30 back to the vacuum pumping arrangement for forming at least part of the purge gas supplied to the vacuum pumping arrangement. In this example, the diverted portion of the gas stream is added to the stream of fresh purge gas supplied from the source 20. Alternatively, the diverted portion of the gas stream may be supplied separately to the vacuum pumping arrangement, either upstream, downstream or between stages of the pump(s) 18. As illustrated, a heat exchanger 32 and a compressor 34 may be provided in the gas conduit 30 for respectively cooling and compressing the diverted portion of the gas stream prior to its return to the vacuum pumping arrangement.

By diverting a portion of the gas stream away from the plasma abatement device 24, the flow rate of gas entering the plasma abatement device 24 can be significantly reduced, thereby enhancing the destruction efficiency of the plasma abatement device 24. With time, the concentration of the perfluorinated species in the first portion of the gas stream will increase, and this can improve the destruction efficiency of the plasma abatement device 24.

Furthermore, by returning the diverted portion to the gas stream as a purge gas for the vacuum pump 18, the flow rate of fresh purge gas to the vacuum pump 18 can be significantly reduced, for example using control valve 21. For example, by diverting around 75% of the gas stream away from the plasma abatement device 24, the amount of fresh purge gas supplied to the vacuum pump 18 can be reduced by 75%.

Returning to Figure 1, the plasma abatement device 24 converts the perfluorinated species within the first portion of the gas stream into species such as CO₂ and HF that can be removed from the gas stream by a wet scrubber 36 or other similar abatement device located downstream from the plasma abatement device 24.

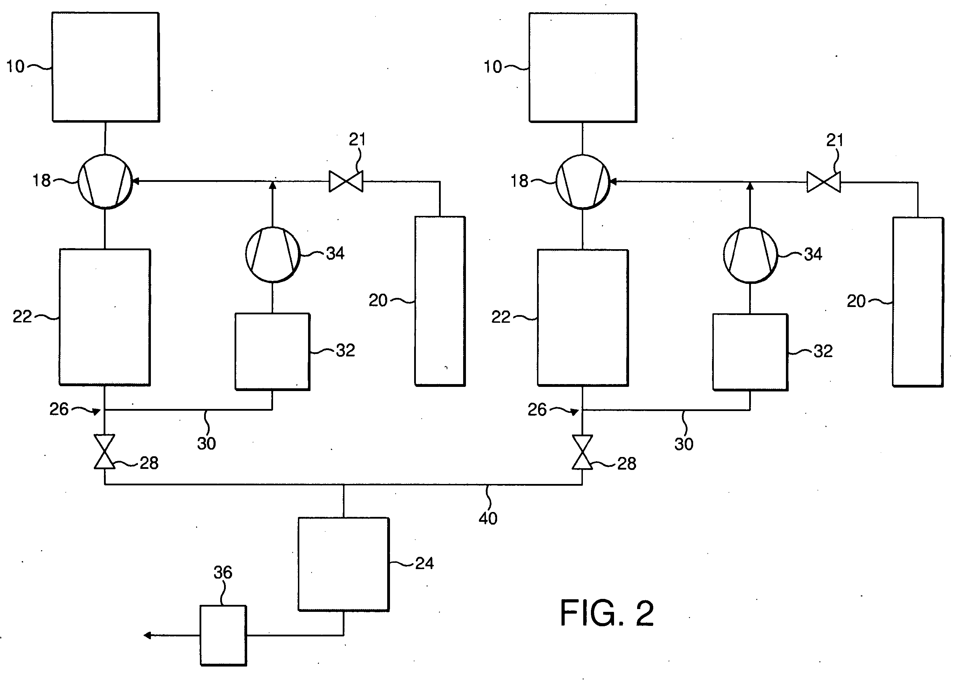

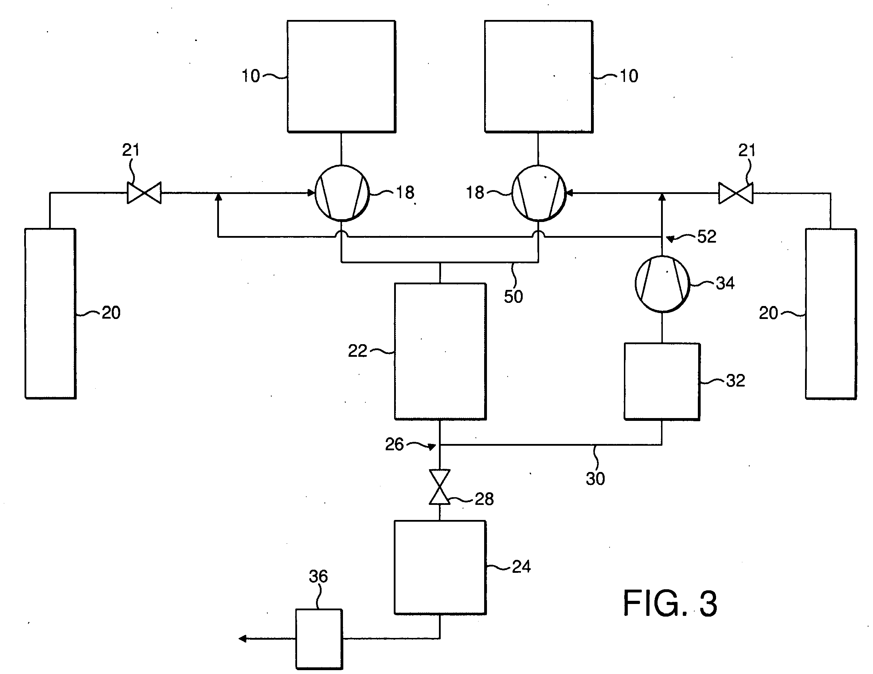

In the second and third embodiments illustrated in Figures 2 and 3, the plasma abatement device 24 is used to treat gas streams exhaust from a plurality of chambers 10 (two shown in Figure 2 for clarity purposes only). In the second embodiment illustrated in Figure 2, the gas stream exhaust from each chamber 10 passes through a respective vacuum pumping arrangement 18 and first abatement device 22 before being split into first and second portions at respective branches 26. As in the first embodiment, each second potion is diverted away from the plasma abatement device 24 and returned to a respective vacuum pumping arrangement via respective conduit 30. The non-diverted first portions of the gas streams are combined at manifold 40, and conveyed to the plasma abatement device 24 for the removal of perfluorinated species therefrom. In the third embodiment illustrated in Figure 3, the gas streams exhaust from the vacuum pumping arrangements of the chambers 10 are combined at a manifold 50 located upstream from first abatement device 22. The combined gas streams are treated in the first abatement device 22 before being split into first and second portions at branch 26. As in the first embodiment, the first portion of the combined gas streams is conveyed to the plasma abatement device 24 for the removal of perfluorinated species therefrom. The second portion of the combined gas streams is conveyed by conduit 30 through heat exchanger 32 and compressor 34 before being split at branch 52 into two similar sub-streams, each of which is conveyed back to a respective vacuum pumping arrangement as in the first embodiment.

## Claims

1. A method of treating a gas stream exhaust from a chamber, the method comprising the steps of adding to the gas stream a purge gas for a vacuum pump (18) for pumping the gas stream from the chamber and **characterised in that** the method further comprises the steps of :
removing a first species from the gas stream using a first abatement device (22); splitting the gas stream into first and second portions;
removing a second species from the first portion of the gas stream using a second, plasma abatement device (24), and returning the second portion of the gas stream to the pump (18).

2. A method according to Claim 1, wherein the second portion of the gas stream is added to the purge gas.

3. A method according to Claim 1 or Claim 2, wherein the first species comprises a by-product from an etch process conducted in the chamber.

4. A method according to any of Claims 1 to 3, wherein the gas stream exhaust from the plasma abatement device is conveyed to a third abatement device for removing a third species from the gas stream.

5. A method according to Claim 4, wherein the third species is a by-product from the removal of the second species from the gas stream.

6. Apparatus for treating a gas stream, the apparatus comprising a vacuum pump (18) and a plasma abatement device (24) located downstream from the vacuum pump for removing a perfluorinated species from the gas stream **characterised in that** the apparatus further comprises **a first abatement device (22) for removing a first species from the gas stream upstream of the plasma abatement device (24), means (28, 30) for diverting a portion of the gas stream away from the plasma abatement device (24), and means (28, 30) for returning the diverted portion to the gas stream as a purge gas for the vacuum pump (18).**

7. Apparatus according to Claim 6, comprising a heat exchanger (32) for cooling the diverted portion of the gas stream prior to its return to the pump.

8. Apparatus according to any of Claim 6 or Claim 7, comprising a compressor (34) for compressing the diverted portion of the gas stream prior to its return to the pump.

9. Apparatus according to any of Claims 6 to 8, comprising an abatement device (22) for removing at least one species from the gas stream before said portion of the gas stream is diverted therefrom.

10. Apparatus according to any of Claims 6 to 8, comprising an abatement device (22) such as a wet scrubber downstream from the plasma abatement device for removing from the gas stream a by-product from the removal of the perfluorinated species from the gas stream.

## Patentansprüche

1. Verfahren zum Behandeln eines Abgasstroms aus einer Kammer, wobei das Verfahren die Schritte umfasst: Zugeben eines Spülgases für eine Vakuumpumpe (18) zum Pumpen des Gasstroms aus der Kammer zu dem Gasstrom, und **dadurch gekennzeichnet, dass** das Verfahren weitere Schritte aufweist: Abscheiden einer ersten Spezies aus dem Gasstrom unter Verwendung einer ersten Vernichtungseinrichtung (22), Aufteilen des Gasstroms in einen ersten und einen zweiten Teil, Abscheiden einer zweiten Spezies von dem ersten Teil des Gasstroms unter Verwendung einer zweiten, mit Plasma arbeitenden Vernichtungseinrichtung (24), und Rückführen des zweiten Teils des Gasstroms zur Pumpe (18).

2. Verfahren nach Anspruch 1, wobei der zweite Teil des Gasstroms zu dem Spülgas zugegeben wird.

3. Verfahren nach Anspruch 1 oder Anspruch 2, wobei die erste Spezies ein Nebenprodukt eines Ätzprozesses ist, der in der Kammer durchgeführt wird.

4. Verfahren nach einem der Ansprüche 1 bis 3, wobei der Abgasstrom aus der Plasma-Vernichtungseinrichtung zu einer dritten Vernichtungseinrichtung zum Abscheiden einer dritten Spezies aus dem Gasstrom befördert wird.

5. Verfahren nach Anspruch 4, wobei die dritte Spezies ein Nebenprodukt der Abscheidung der zweiten Spezies von dem Gasstrom ist.

6. Einrichtung zum Behandeln eines Gasstroms, wobei die Einrichtung eine Vakuumpumpe (18) und eine Plasma-Vernichtungseinrichtung (24) aufweist, die stromab der Vakuumpumpe angeordnet ist, um eine perfluorinierte Spezies aus dem Gasstrom abzuscheiden, **dadurch gekennzeichnet, dass** die Einrichtung weiter eine erste Vernichtungseinrichtung (22) zum Abscheiden einer ersten Spezies aus dem Gasstrom stromab der Plasma-Vernichtungseinrichtung (24), Mittel (28, 30) zum Ableiten eines Teils des Gasstroms weg von der Plasma-Vernichtungseinrichtung (24), und Mittel (28, 30) zum Rückführen des abgeleiteten Teils in den Gasstrom als Spülgas für die Vakuumpumpe (18) aufweist.

7. Einrichtung nach Anspruch 6, mit einem Wärmetauscher (32) zum Kühlen des abgeleiteten Teils des Gasstroms vor dessen Rückführung zu der Pumpe.

8. Einrichtung nach Anspruch 6 oder Anspruch 7, mit einem Verdichter (34) zum Verdichten des abgeleiteten Teils des Gasstroms vor dessen Rückführung zu der Pumpe.

9. Einrichtung nach einem der Ansprüche 6 bis 8, mit einer Vernichtungseinrichtung (22) zum Abscheiden mindestens einer Spezies aus dem Gasstrom, bevor der genannte Teil des Gasstroms davon abgeleitet wird.

10. Einrichtung nach einem der Ansprüche 6 bis 8, mit einer Vernichtungseinrichtung (22) wie beispielsweise einem Nasswäscher stromab der Plasma-Vernichtungseinrichtung zum Abscheiden eines Nebenprodukts aus der Abscheidung der perfluorinierten Spezies aus dem Gasstrom von dem Gasstrom.

## Revendications

1. Procédé de traitement d'un échappement d'un courant gazeux provenant d'une chambre, le procédé comprenant les étapes consistant à ajouter au courant gazeux un gaz de purge pour une pompe à vide (18) destinée à pomper le courant gazeux provenant de la chambre, et ***caractérisé en ce que*** le procédé comprend en outre les étapes consistant à :
éliminer du courant gazeux une première espèce en utilisant un premier dispositif d'abattement (22) ; diviser le courant gazeux en une première et une deuxième fractions ; éliminer de la première fraction du courant gazeux une deuxième espèce en utilisant un deuxième dispositif d'abattement (24) par plasma, et renvoyer à la pompe (18) la deuxième fraction du courant gazeux.

2. Procédé selon la revendication 1, dans lequel la deuxième fraction du courant gazeux est ajoutée au gaz de purge.

3. Procédé selon la revendication 1 ou la revendication 2, dans lequel la première espèce comprend un sous-produit d'un procédé d'attaque chimique réalisé dans la chambre.

4. Procédé selon l'une quelconque des revendications 1 à 3, dans lequel l'échappement du courant gazeux provenant du dispositif d'abattement par plasma est acheminé jusqu'à un troisième dispositif d'abattement pour éliminer une troisième espèce du courant gazeux.

5. Procédé selon la revendication 4, dans lequel la troisième espèce est un sous-produit de l'élimination de la deuxième espèce du courant gazeux.

6. Dispositif pour le traitement d'un courant gazeux, le dispositif comprenant une pompe à vide (18) et un dispositif (24) d'abattement par plasma situé en aval de la pompe à vide pour éliminer du courant gazeux une espèce perfluorée, ***caractérisé en ce* que** le dispositif comprend en outre un premier dispositif d'abattement (22) pour éliminer une première espèce du courant gazeux en amont du dispositif (24) d'abattement par plasma, des moyens (28, 30) pour détourner une fraction du courant gazeux du dispositif (24) d'abattement par plasma, et des moyens (28, 30) pour renvoyer la fraction détournée dans le courant gazeux comme gaz de purge pour la pompe à vide (18).

7. Dispositif selon la revendication 6, comprenant un échangeur de chaleur (32) pour refroidir la fraction de courant gazeux détournée avant son renvoi à la pompe.

8. Dispositif selon l'une quelconque de la revendication 6 ou de la revendication 7, comprenant un compresseur (34) pour comprimer la fraction de courant gazeux détournée avant son renvoi à la pompe.

9. Dispositif selon l'une quelconque des revendications 6 à 8, comprenant un dispositif (22) d'abattement pour éliminer du courant gazeux au moins une espèce avant que ladite fraction du courant gazeux n'en soit détournée.

10. Dispositif selon l'une quelconque des revendications 6 à 8, comprenant un dispositif (22) d'abattement tel qu'un séparateur par voie humide en aval du dispositif d'abattement par plasma pour éliminer du courant gazeux un sous-produit de l'élimination de l'espèce perfluorée du courant gazeux.
